# EUROPEAN PATENT SPECIFICATION

(11) **EP 3 513 068 B1**
(45) Date of publication and mention of the grant of the patent: **18.08.2021**
(21) Application number: 17768977.5
(22) Date of filing: 14.09.2017
(51) Int. Cl.: F03D 13/10, F03D 1/06, F03D 13/00

(54) **METHOD FOR FITTING A TIP EXTENSION TO A WIND TURBINE BLADE**
VERFAHREN ZUR BEFESTIGUNG EINER SPITZENERWEITERUNG AN EINE WINDTURBINEN ROTORBLATT
PROCÉDÉ POUR AJUSTER UNE EXTENSION DE POINTE À UNE PALE D'ÉOLIENNE

(30) Priority: 15.09.2016 IN 201611031521; 03.11.2016 DK PA201670865
(43) Date of publication of application: 24.07.2019
(73) Proprietor: Vestas Wind Systems A/S, 8200 Aarhus N (DK)
(72) Inventor: BARTON, Leon, Newport Isle of Wight PO30 5NP (GB); NIELSEN, Kennet Hvid, 8920 Randers NV (DK); RAJAN, Binoy, Kannur 670562 (IN)
(74) Representative: Vestas Patents Department
(86) International application number: PCT/DK2017/050294
(87) International publication number: WO 2018/050195

(56) References cited:
- EP-A1- 2 700 811
- EP-A1- 2 947 311
- EP-A1- 3 037 655
- WO-A2-2009/141018
- CN-A- 105 822 497

## Description

### Technical field

The present invention relates generally to tip extensions for wind turbine blades, and in particular to a method for fitting a tip extension to a wind turbine blade

### Background

There is a continuing desire to generate increased levels of power from existing wind power production facilities such as on-shore and off-shore wind farms. One way to achieve this is to add further wind turbines to a wind farm or to replace existing wind turbines with larger wind turbines capable of generating more power. Another way to achieve this is to increase the power production and energy capture from existing turbines, for example by replacing the blades with larger blades. However, as the blades of wind turbines are expensive components, it is often prohibitive in terms of cost to replace the blades.

It has therefore been proposed to modify the blades of existing wind turbines by adding devices to the blades. For example, it is known to add devices to the blades to increase the dimensions of the blades. One example of this is a blade tip extension, which may be provided in the form of a sleeve or sock that fits over the tip of a blade and increases the length of the blade. The provision of tip extensions increases the overall length of the blades and thus increases the swept area of the rotor, allowing the wind turbine to capture more energy from the wind.

The installation of blade tip extensions is technically challenging. The tip extensions must be fitted accurately to the blade and attached firmly. As the devices are typically installed to wind turbine blades in the field, the process is carried out by operators working at a significant height with exposure to often harsh climate conditions. It is therefore important to develop attachment processes that are both straightforward and reliable.

CN105822497 describes a method of mounting a tip extension to a wind turbine blade.

### Summary of the invention

According to a first aspect of the present invention there is provided a method of fitting a tip extension to a wind turbine blade in accordance with claim 1.

The wind turbine rotor is preferably arranged such that the rotor blade to which the tip extension is to be fitted is pointing downwards, and preferably substantially in a six o'clock position. This minimises the height above ground at which the tip extension is to be fitted. The installation process may involve the use of a cradle, for example on the end of an articulated arm, to lift personnel up to the blade to install the blade clamp. With the blade pointing vertically downwards, the tip extension can then be pulled generally upwards over the tip end of the blade.

The connecting rods advantageously provide a relatively low cost and simple yet reliable means of connection between the blade clamp and the lifting tool.

The method may comprise arranging a lifting device between the blade clamp and the tip extension lifting tool. The lifting device may be operated to lift the lifting tool and supported tip extension up towards the blade clamp. The lifting device may comprise one or more ratchet hoists. The ratchet hoists may be connected between lifting eyes of the blade clamp and lifting tool respectively

The lifting device may additionally or alternatively comprise a winch. The winch is preferably located near the base of the wind turbine tower. For example, the winch may preferably be located on the ground, or in the case of an offshore wind turbine the winch may be located on the wind turbine foundation platform or on a sea-based vessel. The blade clamp may be provided with one or more pulleys. Cables may extend up from the winch, around the one or more pulleys, and down to the lifting tool. The winch can be operated conveniently from the ground in order to lift the lifting tool and supported tip extension up to the wind turbine blade.

The tip extension lifting tool may comprise one or more adjustable pressure pads. The pressure pads may be arranged to support the tip extension. For example, the pressure pads may contact an outer surface of the tip extension, preferably on both sides of the tip extension. The method may comprise adjusting the pressure pads to move the tip extension within the lifting tool. This allows the tip extension to be moved relative to the lifting tool when the lifting tool is connected to the blade clamp. In this way, the precise alignment between the tip extension and the blade can be adjusted. The pressure pads are preferably arranged such that adjusting the pressure pads causes the tip extension to move relative to the blade substantially in a flapwise direction. As known to persons skilled in the art, the flapwise direction is perpendicular to both the chordwise and spanwise directions of a blade.

The tip end of the blade may include a blade tip connector. The blade tip connector preferably provides an electrical connection (i.e. a conductive conduction) to a lightning protection system of the blade. The tip extension may also include lightning protection components such as one or more lightning receptors. A tip extension connector may be provided inside the tip extension. The tip extension connector is preferably located inside the connector such that it aligns with the blade tip connector when the tip extension is fitted to the blade. The two connectors preferably form a push-fit connection. The method may comprise establishing a push fit connection inside the tip extension between the respective connectors by adjusting the connecting device. When the connectors are connected, the lightning protection components of the tip extension are connected to the blade's existing lightning protection system.

The method may comprise providing the tip extension lifting tool and the blade clamp in the form of a tool kit in which the blade clamp is connected to the tip extension lifting tool by means of the connecting device. The method may further comprise detaching the blade clamp from the tip extension lifting tool prior to attaching the blade clamp to the blade. The connecting device therefore may serve both to connect the blade clamp and lifting tool together in the tool kit, and also to provide the adjustable connection between the blade clamp and the lifting tool utilised during fitting of the tip extension.

An apparatus may be provided for use in fitting a tip extension to a wind turbine blade, the apparatus comprising: a tip extension lifting tool comprising a support frame for supporting the tip extension; a blade clamp for attaching to the wind turbine blade; and a connecting device for connecting the blade clamp to the tip extension lifting tool, wherein the connecting device is adjustable to vary the separation between the blade clamp and the lifting tool when the blade clamp and the lifting tool are connected.

The apparatus is referred to herein as a tool kit, and comprises the main components used in the tip extension installation process, which may conveniently be connected together to facilitate handling and transportation of the equipment. The tool kit preferably comprises a wheel assembly. The wheel assembly may be attachable to the tip extension lifting tool. The wheel assembly facilitates manoeuvring of the tool kit and also facilitates the initial process of lifting the tip extension lifting device up from a horizontal to a vertical position. The wheel assembly may be detached from the lifting tool prior to lifting the lifting tool from the ground.

The support frame of the lifting tool preferably has a clam shell design. The support frame preferably comprises windward and leeward halves that are pivotally connected along one side of the support frame. Pivoting the windward or leeward halves of the frame allows the support frame to be opened or closed. The support frame can be opened to receive the tip extension and closed to form a clamp around the tip extension.

The blade clamp preferably has a clam shell design. The blade clamp preferably comprises windward and leeward halves that are pivotally connected along one side of the blade clamp. Pivoting the windward or leeward halves of the blade clamp allows the blade clamp to be opened or closed. The blade clamp can be opened to attach to or detach from the blade and closed to form a clamp around the blade.

As discussed above in the context of the method, the tip extension lifting tool may further comprise a plurality of adjustable pressure pads. The pressure pads are preferably movable relative to the support frame to adjust the position of the tip extension relative to the support frame. The pressure pads may be mounted to longitudinal members of the support frame. The pressure pads are preferably moveable inwardly and outwardly relative to an interior of the support frame. The pressure pads preferably have a rubber surface, which advantageously grips the surface of the tip extension without damaging the surface.

### Brief description of the drawings

Figure 1 shows a wind turbine comprising a plurality of blades fitted with tip extensions;
Figure 2 shows a tip extension for fitting to a wind turbine blade;
Figure 3 shows a tip extension installation tool kit comprising a tip extension lifting tool and a blade clamp;
Figure 4 is a perspective view of the tip extension lifting tool in isolation;
Figure 5 is a perspective view of the blade clamp in isolation;
Figure 6 shows a tip extension lifting tool in an open configuration ready to receive the tip extension;
Figure 7 shows the tip extension placed in the lifting tool with the lifting tool in the open configuration;
Figure 8 shows the lifting tool being closed around the tip extension;
Figure 9 shows the tip end of the blade arranged in a cradle to facilitate preparation of the blade for fitting of the tip extension;
Figure 10a shows a solid metal tip of the blade being removed prior to fitting the tip extension;
Figure 10b shows adhesive dams applied to the tip end of the blade prior to fitting the tip extension;
Figures 11 and 12 show the blade clamp being mounted to the blade prior to fitting the tip extension;
Figure 13 shows ratchet hoists attached to the blade clamp;
Figure 14 shows chains of the ratchet hoists extended and temporarily secured to the blade;
Figure 15 shows the lifting tool attached to a lifting hoist;
Figure 16 shows a wheel assembly being detached from the lifting tool;
Figure 17 shows the tip extension being fitted over the tip of the blade;
Figure 18 shows the ratchet chains attached to the lifting tool;
Figure 19 illustrates the ratchet hoists being operated to pull the tip extension further over the blade;
Figure 20 illustrates connecting rods being connected between the blade clamp and the tip extension lifting tool;
Figure 21 shows the connecting rods being turned to draw the tip extension lifting tool closer towards the blade clamp;
Figures 22 and 22a illustrate an electrical connection inside the tip extension between lightning protection components of the blade and tip extension;
Figures 23 and 23a illustrate the tip extension being aligned with the blade by adjustment of pressure pads of the lifting tool;
Figures 24 and 24a show adhesive being injected through injection holes provided in the tip extension;
Figure 25 shows the blade clamp and lifting tool being released from the blade and tip extension respectively;
Figure 26 schematically illustrates an alternative example of the invention in which a ground-based winch is used to lift the tip extension.

### Detailed description

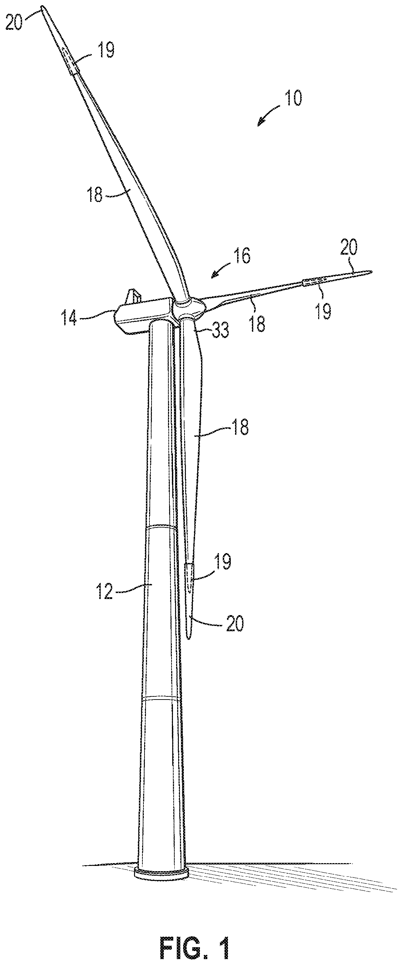

Figure 1 is a schematic view of a horizontal axis wind turbine 10 according to an embodiment of the present invention. The wind turbine 10 comprises a tower 12 supporting a nacelle 14. A rotor 16 is mounted to the nacelle 14. The rotor 16 comprises a plurality of wind turbine blades 18. In this example, the rotor 16 comprises three blades 18, but in other embodiments the rotor 16 may have any number of blades 18. A tip end 19 of each blade 18 is retro-fitted with a blade tip extension (BTE) 20, which extends the effective length of the blade 18.

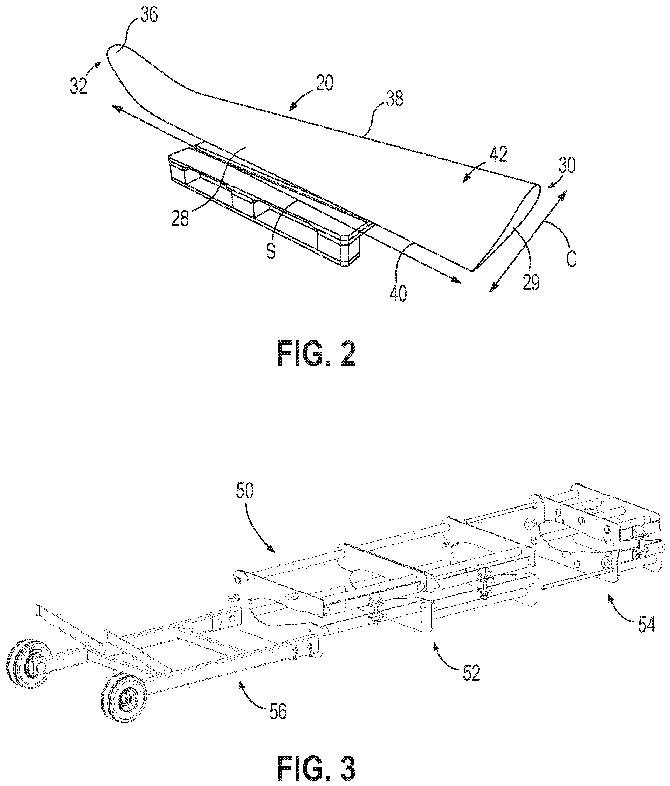

Figure 2 shows a blade tip extension 20 in isolation. The blade tip extension 20 comprises an outer shell 28 defining a substantially hollow interior 29 for accommodating the tip end 19 of a wind turbine blade 18 (see Figure 1). The outer shell 28 is preferably made primarily from composite materials, for example glass-fibre reinforced plastic (GFRP). The tip extension 20 is in the form of a sock, and comprises an inboard end 30 and an outboard end 32. When fitted to the blade 18, the inboard end 30 of the tip extension 20 is located closer to a root 33 (see Figure 1) of the blade 18 than the outboard end 32. The inboard end 30 of the tip extension 20 is open to receive the tip end 19 of the blade 18 to be extended. The outboard end 32 of the tip extension 20 is closed and comprises a tip 36, which forms the tip of the extended blade 18 when the tip extension 20 is fitted.

The outer shell 28 of the tip extension 20 extends longitudinally in a lengthwise ('spanwise') direction S between the open root end 30 towards the tip 36, and extends transversely in a widthwise ('chordwise') direction C between a leading edge 38 and a trailing edge 40. The outer shell 28 defines an airfoil profile in cross-section. The outer shell comprises a windward side 42 (also referred to as a pressure side), and a leeward side (also referred to as a suction side). Only the windward side 42 is visible in Figure 2. The tip 36 of the tip extension 20 is curved in this example such that it is angled away from the wind turbine tower 12 (see Figure 1) when the tip extension 20 is attached to the blade 18. This avoids the risk of the extended blade 18 striking the tower 12 in use when subject to bending loads. In other embodiments the tip extension 20 may be straight.

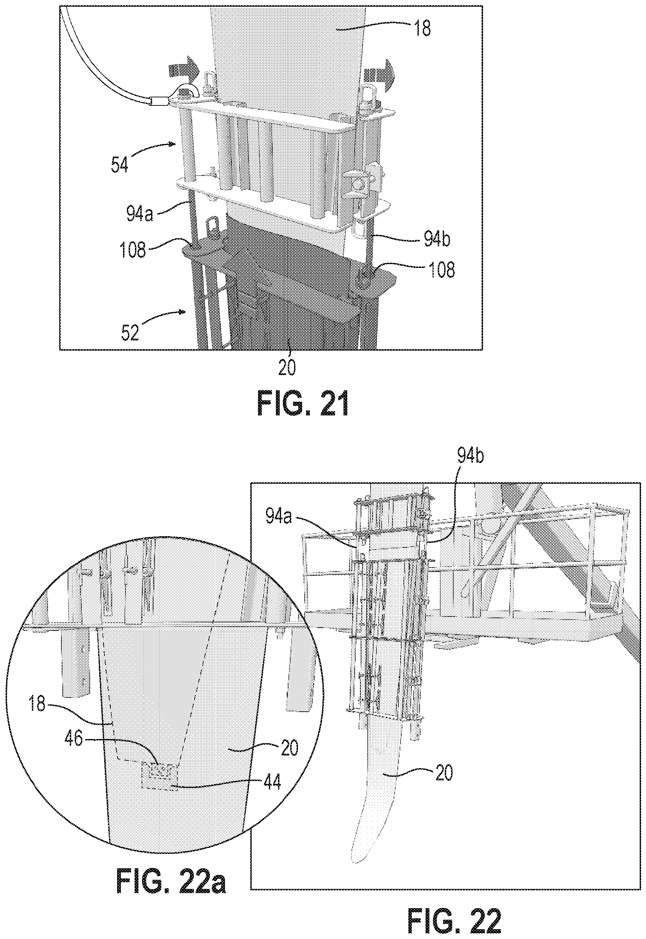

Whilst not shown in Figure 2, the tip extension 20 may optionally include components of a lightning protection system, for example one or more lightning receptors. The tip extension 20 may also include a connector 44 (shown in Figure 22a) arranged inside the tip extension 20, which connects to a corresponding connector 46 (also shown in Figure 22a) on the blade 18, when the tip extension 20 is installed. The connectors 44, 46 allow the lightning protection components of the tip extension 20 to plug into the existing lightning protection system in the blade 18. Preferably a push fit connection is formed between the connectors 44, 46.

Referring to Figure 3, this shows a tool kit 50 employed in the installation or fitting of the tip extension 20 to a wind turbine blade 18. The tool kit 50 comprises a tip extension lifting tool 52 and a blade clamp 54. In this example, the tool kit 50 also comprises an optional wheel assembly 56. The blade clamp 54 and wheel assembly 56 are each connectable to the lifting tool 52, with the blade clamp 54 being connectable to one end of the lifting tool 52 and the wheel assembly 56 being connectable to the other end. Connecting the various parts 52, 54, 56 together facilitates transportation, handling and storage of the tool kit 50, and conveniently provides a single unit comprising the main components utilised when fitting the tip extension 20 to the blade 18.

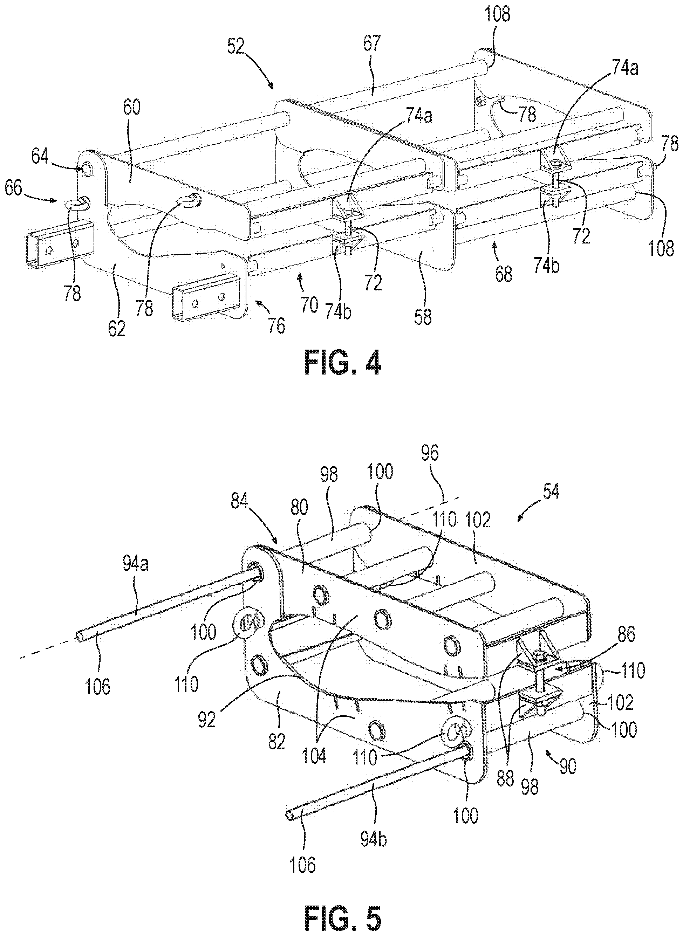

Figure 4 is a perspective view of the tip extension lifting tool 52 in isolation. The lifting tool 52 generally comprises a support frame 58 for holding and supporting the tip extension 20 during lifting of the tip extension 20 and when fitting the tip extension 20 to the blade 18. The support frame 58 has a clam-shell design, comprising windward and leeward halves 60, 62 that are pivotally connected by a hinged connection 64. The hinged connection 64 is on one side of the frame 58 (in this example on a leading-edge side 66 of the frame 58). The hinged connection 64 between the frame halves 60, 62 allows one half of the frame (in this case the windward half 60) to pivot relative to the other half (in this case the leeward half 62) so that the frame 58 can be opened or closed. In this example, the windward half frame 60 pivots about a rail 67 that extends longitudinally along the leading-edge side 66 of the support frame 58.

In this example, the support frame 58 comprises two longitudinal sections: an inboard section 68 and an outboard section 70. The inboard section 68 is configured to support a relatively inboard portion of the tip extension 20, near the open end 30 of the tip extension 20, whilst the outboard section 70 is configured to support a relatively outboard portion of the tip extension 20 closer to the tip 36 of the tip extension 20. The inboard and outboard sections 68, 70 of the support frame 58 can be opened and closed independently of one another. In other embodiments, the frame 58 may comprise a single longitudinal section, or more than two longitudinal sections. Forming the frame 58 in multiple longitudinal sections can be advantageous in that it allows the shape of the sections 68, 70 to be customised to fit the local airfoil profile of the tip extension 20, and reduces the weight of the sections 68, 70 to be lifted manually when opening or closing the frame 58.

When closed, the windward and leeward half frames 60, 62 may be locked together by fasteners 72. In this embodiment, the fasteners 72 are in the form of hex bolts and nuts. As shown in Figure 4, eyelets 74a, 74b may be provided on a trailing edge side 76 of the half frames 60, 62. Eyelets 74a on the windward halves 60 of the frame 58 align with eyelets 74b on the leeward halves 62 of the frame 58 when the support frame 58 is closed. The hex bolts 72 are inserted through the aligned eyelets 74a, 74b and the nuts and washers are provided on the ends of the hex bolts. When tightened, the nuts and bolts 72 serve to lock the frame 58 in the closed position. Instead of nuts and bolts, other suitable and convenient fasteners such as clasps may be used in other embodiments.

The lifting tool 52 also includes a plurality of lifting eyes 78, which are provided on one or both ends of the tool 52. As will be described later, the lifting eyes 78 are utilised when lifting the lifting tool 52 up to a wind turbine blade 18 during fitting of the tip extension 20.

Referring now to Figure 5, this shows the blade clamp 54 of the tool kit 50. As will be described later, the blade clamp 54 is fitted to the wind turbine blade 18 to be extended prior to attaching the tip extension 20. The blade clamp 54 also has a clam-shell design, and includes windward and leeward halves 80, 82, which are hinged together along one side (in this case along a leading edge side 84), allowing the clamp 54 to be opened and closed. Similar to the lifting tool 52 discussed above, the clamp 54 may be fastened in the closed position by one or more fasteners 86 (in this case a hex bolt and nut) that extend through aligned eyelets 88, provided on a trailing edge side 90 of the clamp 54. Pads (not shown) may be provided on interior surfaces 92 of the clamp 54 to engage with the blade 18. The pads 92, which are preferably made from rubber, provide grip and prevent the clamp 54 from damaging the surface of the blade 18.

The clamp 54 includes a connecting device 94a, 94b, which in this example is in the form of a pair of connecting rods. The connecting rods 94a, 94b are used to connect the clamp 54 to the lifting tool 52 in the tool kit 50, and are also used to secure the clamp 54 to the lifting tool 52 during fitting of the tip extension 20 as will be described later. The connecting rods 94a, 94b in this example are in the form of stud rods. A first rod 94a is provided on the leading edge side 84 of the clamp 54 and a second rod 94b is provided on a trailing edge side 90 of the clamp 54. The first rod 94a extends longitudinally along the pivot axis 96 between the windward and leeward halves 80, 82 of the clamp 54. The second rod 94b extends longitudinally through the leeward half 82 of the clamp 54.

The rods 94a, 94b each extend through respective longitudinal sleeves 98 and apertures 100 of the clamp 54. The apertures 100 are provided in respective inboard and outboard ends 102, 104 of the clamp 54, and the sleeves 98 extend between the inboard and outboard ends 102, 104. Free ends 106 of the rods 94a, 94b project longitudinally beyond the blade clamp 54 when the rods 94a, 94b are fully inserted through the apertures 100 and sleeves 98 of the clamp 54. The free ends 106 of the rods 94a, 94b include screw threads (not shown), which engage with threaded apertures 108 in the tip extension lifting tool 52 (see Figure 4) when the clamp 54 connects to the lifting tool 52. When the rods 94a, 94b are engaged with the lifting tool 52, they can be adjusted (by turning) to vary the separation between the blade clamp 54 and the lifting tool 52.

The blade clamp 54 also includes a plurality of eyes 110, which are provided on one or both ends 102, 104 of the clamp 54. As will be described later, the eyes 110 are utilised for lifting operations and for attaching safety lines to the clamp 54.

The process of fitting a tip extension 20 to a wind turbine blade 18 utilising the tool kit 50 will now be described with reference to the remaining figures.

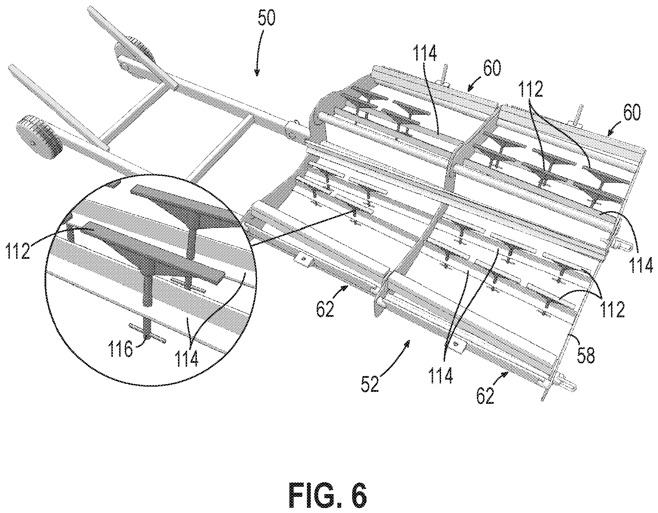

Referring to Figure 6, this shows an embodiment of the tip extension tool kit 50 with the blade clamp 54 removed and in which the tip extension lifting tool 52 is shown in an open configuration ready to receive the tip extension 20 (not shown). In the open configuration, the windward halves 60 of the support frame 58 are pivoted away from the leeward halves 62, such that the inside of the support frame 58 is accessible.

As shown in Figure 6, the windward and leeward halves 60, 62 of the tip extension lifting tool 52 in this embodiment include a plurality of pressure pads 112. The pressure pads 112 contact and support the windward and leeward sides of the tip extension 20 when the tip extension 20 is supported in the frame 58. The pressure pads 112 are made from rubber or other suitable material that may provide grip whilst preventing damage to the surface of the tip extension 20. The pressure pads 112 in this example are each independently connected to longitudinal members 114 of the support frame 58 by means of adjustable fasteners 116, in this case bolts. The fasteners 116 can be adjusted to vary the positions of the pressure pads 112 relative to the support frame 58. The pressure pads 112 are moveable continuously between innermost and outermost positions relative to the longitudinal members 114 of the frame 58. This allows the lifting tool 52 to be adjusted to support tip extensions 20 of various shapes and sizes. As will be described later, the adjustable pressure pads 112 also enable fine positional adjustment of the tip extension 20 when supported in the frame 58.

Prior to lifting the tip extension 20 into the support frame 58, the pressure pads 112 are moved to their outermost positions (i.e. closest to their mounting points on the support frame 58). The pressure pads 112 are adjusted by hand by turning their associated adjustment bolts 116 (see enlarged portion of Figure 6).

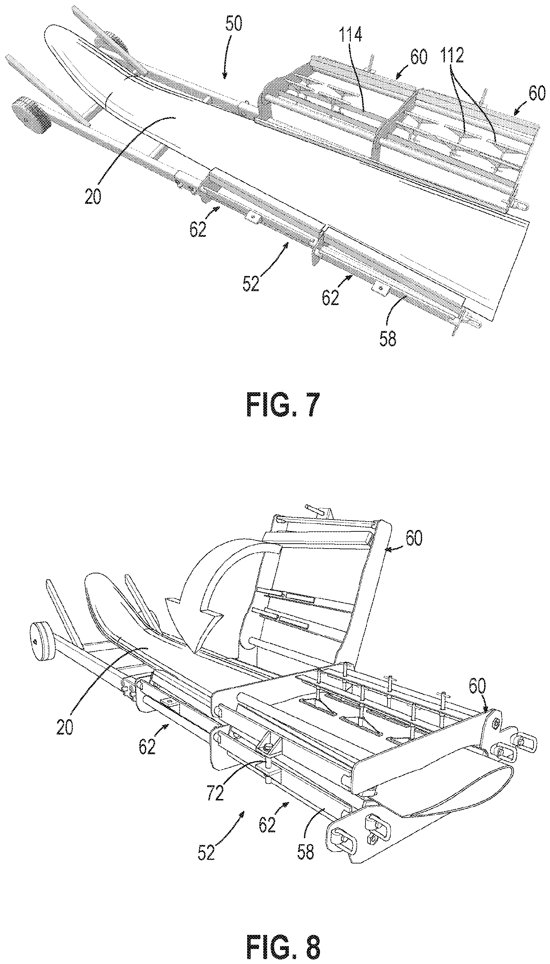

Referring to Figure 7, with the lifting tool 52 open and the pressure pads 112 in their outermost positions, the tip extension 20 is lifted into the support frame 58. In the open configuration of the lifting tool 52 shown in Figure 7, the tip extension 20 is supported at least partially by the pressure pads 112 attached to the leeward halves 62 of the support frame 58. Referring to Figure 8, the lifting tool 52 is then closed by pivoting the windward halves 60 of the support frame 58 towards the leeward halves 62. The bolts 72 are tightened to lock the respective halves 60, 62 together. The tip extension 20 is now firmly supported within the support frame 58 and ready to be lifted up towards the blade 18.

In preparation for fitting the tip extension 20 to the blade 18, the wind turbine rotor 16 (refer to Figure 1) is rotated such that the blade 18 to which the tip extension is to be attached is pointing vertically downwards in a six o'clock position. The rotor 16 is then locked in this position by application of the wind turbine's rotor brakes.

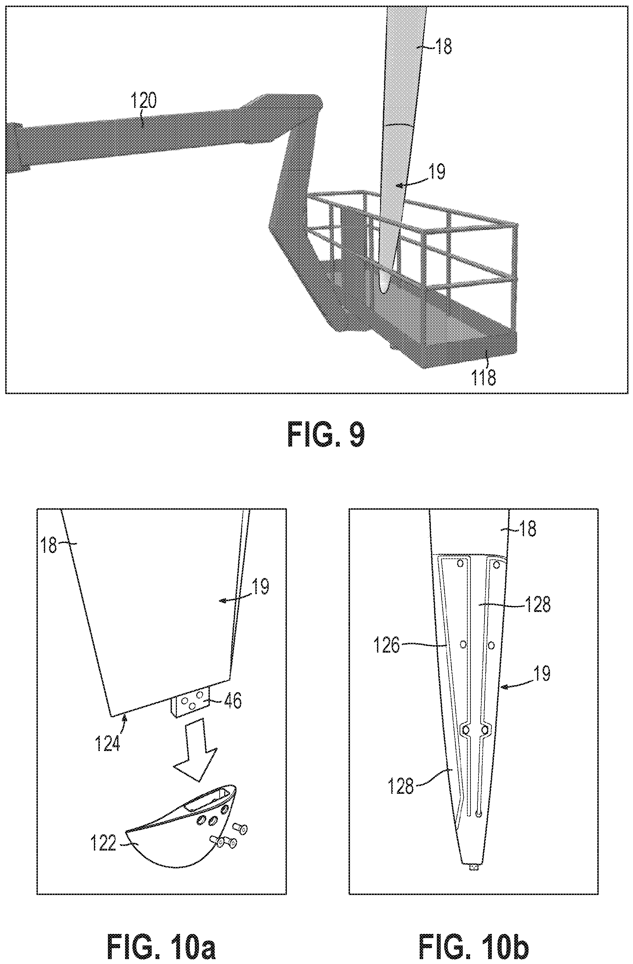

Prior to fitting the tip extension 20, the tip end 19 (indicated in Figure 1) of the wind turbine blade 18 may optionally be subject to some preparatory procedures, as will now be described briefly with reference to Figures 9 and 10.

Referring to Figure 9, this shows a cradle 118 mounted at an end of a telescopic and articulated arm 120. The other end of the arm 120 (not shown) may be connected to a truck or crane or other ground-based vehicle in the case of an on-shore turbine installation, or to a boat or other sea-based vessel in the case of an offshore installation. The cradle 118 is lifted up to the blade 18 such that the tip end 19 of the blade 18 is positioned within the cradle 118.

Referring to Figure 10a, in this example the tip end 19 of the blade includes a solid metal tip 122, which is part of the blade's lightning protection system. The solid metal tip 122 may be removed from the blade 18 prior to fitting the tip extension 20. Removing the solid metal tip 122 reveals a blade tip connector 46, which projects from a blunt end surface 124 of the blade 18. The blade tip connector 46 provides the electrical connection between the solid metal tip 122 and the other components of the blade's lightning-protection system. As mentioned previously in connection with Figure 2, the tip extension 20 may include lightning protection components, and a connector 44 (shown in Figure 22a) may be provided inside the tip extension 20, which connects with the blade tip connector 46 on the blade 18 when the tip extension 20 is fitted.

Referring to Figure 10b, adhesive dams 126 may be applied to the outer surface of the tip end 19 of the blade 18 prior to fitting the tip extension 20. The adhesive dams 126 may comprise foam tape. The adhesive dams 126 are arranged at the perimeter of predefined bond areas 128 defined on the outer surface of the blade 18. When the tip extension 20 is fitted, adhesive is supplied between the tip extension 20 and the blade 18 to bond the tip extension 20 to the blade 18. The adhesive dams 126 serve to constrain the adhesive to the predefined bond areas 128.

The tip end 19 of the blade 18 may be subject to further preparatory procedures if required, for example it may be cleaned and/or gel coat and/or paint may be removed at least from the bond areas 128 and the bond areas 128 may be sanded if necessary to provide a rough surface that enhances bonding. Any lightning receptors at the tip end 19 of the blade 18 may also be removed if they are to be covered by the tip extension 20.

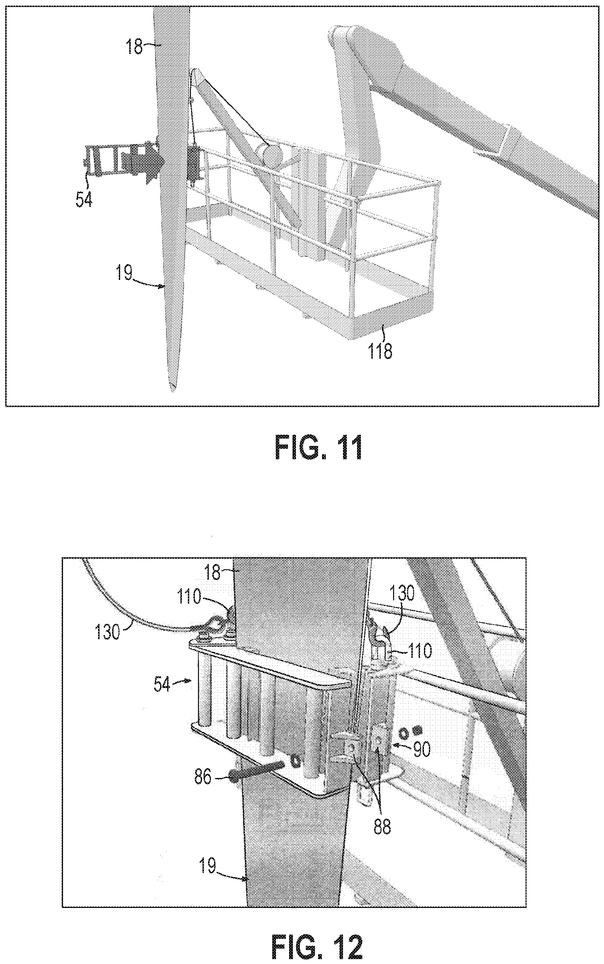

Referring now to Figure 11, after preparation of the tip end 19 of the blade 18, the blade clamp 54 is attached to the blade 18. The blade clamp 54 is attached at a predetermined spanwise position of the blade 18 that is inboard of the prepared region of the blade 18 to be covered by the tip extension 20. In this example, the blade clamp 54 is attached at a position that is radially inboard of, and adjacent to, the tip end 19 of the blade 18.

As shown in Figure 11, the cradle 118 may also be used when attaching the blade clamp 54 to the blade 18. The clamp 54 is offered up to the blade 18 in its open position and then closed around the blade 18. Referring to Figure 12, the bolt 86 is then inserted through the eyelets 88 at the trailing-edge side 90 of the clamp 54 and secured with a nut and washer. The bolt 86 is tightened to clamp the blade clamp 54 firmly around the blade 18. As shown in Figure 12, a safety line 130 may be attached to the eyes 110 of the clamp 54 and the other end of the safety line 130 may be attached to the tower, hub or nacelle of the wind turbine.

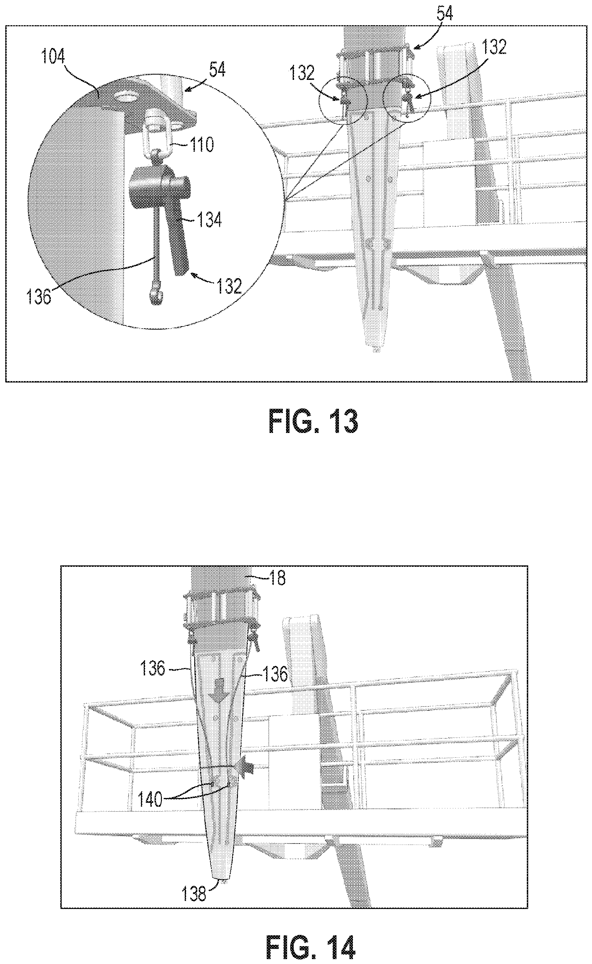

Referring to Figure 13, a lifting device 132 is attached to the blade clamp 54. In this example the lifting device 132 is embodied as a pair of ratchet hoists 132, which are attached to the eyes 110 on the outboard end 104 of the clamp 54. The ratchet hoists 132 each include a ratchet lever 134 and a ratchet chain 136, as shown in the enlarged portion of Figure 13. The ratchet levers 134 are attached to the eyes 110, whilst the ratchet chains 136 hang downwardly from the levers 134. Referring to Figure 14, the ratchet chains 136 are extended downwardly and temporarily secured to the blade 18 near the tip 138 of the blade 18. In this position, the free ends 140 of the chains 136 are conveniently positioned for later attachment to the blade lifting tool 52, as will be described later.

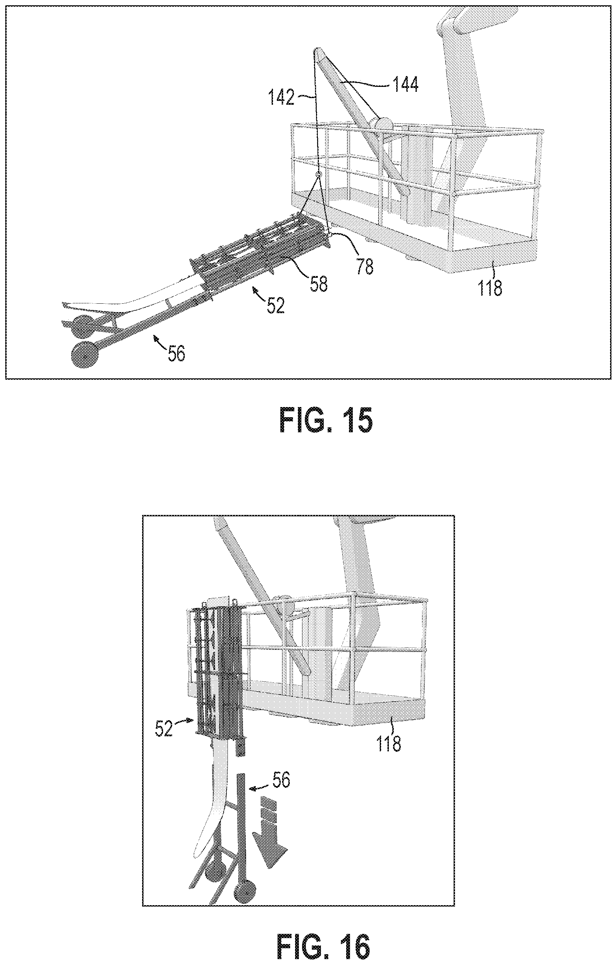

Referring to Figure 15, this shows the tip extension lifting tool 52 attached to a lift hoist 142. The lift hoist 142 extends from a lifting arm 144 in the cradle 118, and connects to the lifting eyes 78 of the support frame 58 of the lifting tool 52. The wheel assembly 56 allows the lifting tool 52 to roll across the ground as the lifting tool 52 is initially lifted up from a horizontal position.

Referring to Figure 16, the cradle 118 is raised until the lifting tool 52 is in a vertical orientation, with the wheel assembly 56 still in contact with or close to the ground. At this point, the wheel assembly 56 may be detached from the lifting tool 52.

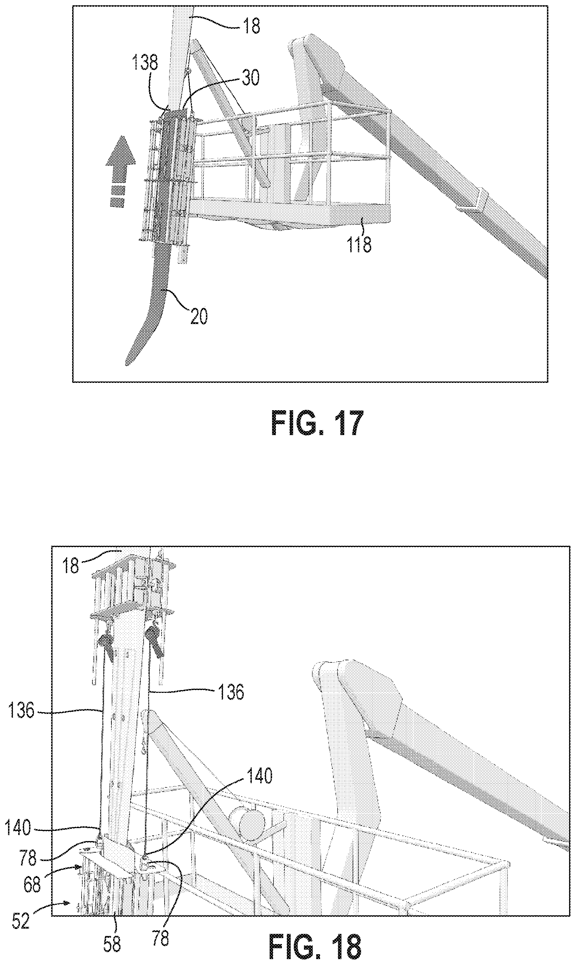

Referring to Figure 17, the cradle 118 is then lifted up towards the wind turbine blade 18 and the tip extension 20 is fitted over the tip 138 of the blade 18. Specifically, the tip extension 20 is positioned so that the tip 138 of the blade 18 is located inside the open inboard end 30 of the tip extension 20.

Referring to Figure 18, the ratchet chains 136 are detached from their temporary attachment to the blade 18 and the free ends 140 of the chains 136 are attached to the lifting eyes 78 on the inboard section 68 of the support frame 58 of the tip extension lifting tool 52.

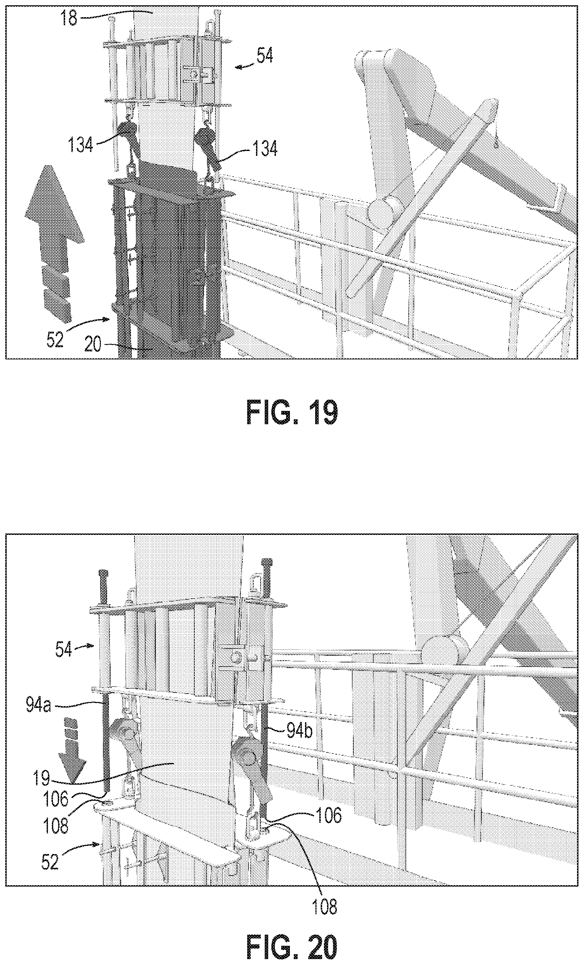

Referring to Figure 19, the ratchet levers 134 are now operated to lift the tip extension lifting tool 52 up towards the blade clamp 54. This lifting process causes the supported tip extension 20 to be pulled further upwards and over the tip end of the blade 18.

Referring to Figure 20, when the tip extension lifting tool 52 is within sufficient proximity to the blade clamp 54, the connecting device 94a, 94b is connected to the lifting tool 52. Specifically, in this embodiment, the threaded projecting ends 106 of the rods 94a, 94b that extend through the blade clamp 54 are engaged with the threaded apertures 108 defined in the lifting tool 52.

Referring to Figure 21, the connecting device 94a, 94b is then adjusted to vary the separation between the blade clamp 54 and the lifting tool 52. Specifically, the connecting rods 94a, 94b are turned within the threaded apertures 108 of the lifting tool 52 causing the lifting tool 52 to move closer towards the blade clamp 54. This causes the tip extension 20 to be pulled over the tip end of the blade 18. The use of the threaded connecting rods 94a, 94b allows the position of the tip extension 20 to be pulled onto the blade 18 in a controlled manner. Alternatively, in other examples, rather than the connecting rods 94a, 94b being used, other mechanical or hydraulic devices could be used to pull the tip extension onto the blade.

Referring additionally to Figure 22 and in particular to the enlarged view of 22a, the rods 94a, 94b are adjusted until the connector 44 inside the tip extension 20 connects with the blade tip connector 46 of the blade 18. The connectors 44, 46 preferably form a push fit connection. One of the connectors 44 or 46 preferably comprises a plug and the other connector 44 or 46 preferably comprises a socket. The connected connectors 44, 46 establish a conductive electrical connection between the lightning protection components of the tip extension 20 and the blade's existing lightning protection system.

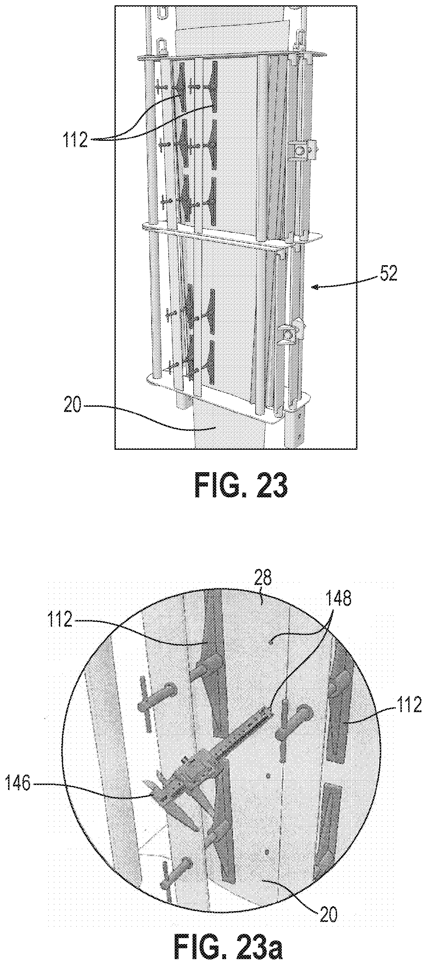

Referring to Figure 23, the pressure pads 112 of the tip extension lifting tool 52 are adjusted to move the tip extension 20 within the lifting tool 52 and thereby adjust the gap size between the inner surface of the tip extension 20 and the bond areas 128 (see Figure 10b) defined on the outer surface of the blade 18. This is to ensure there is sufficient space for adhesive in these regions, which is supplied in a subsequent step.

Referring to the enlarged view of Figure 23a, the size of the gap may be measured using a calliper 146 that may be inserted through adhesive injection holes 148 that are preferably pre drilled through the outer shell 28 of the tip extension 20. If the bond gap is larger or smaller than required then the relevant pressure pads 112 may be adjusted by moving them inwardly or outwardly as required to move the tip extension 20 in a flapwise direction relative to the blade 18.

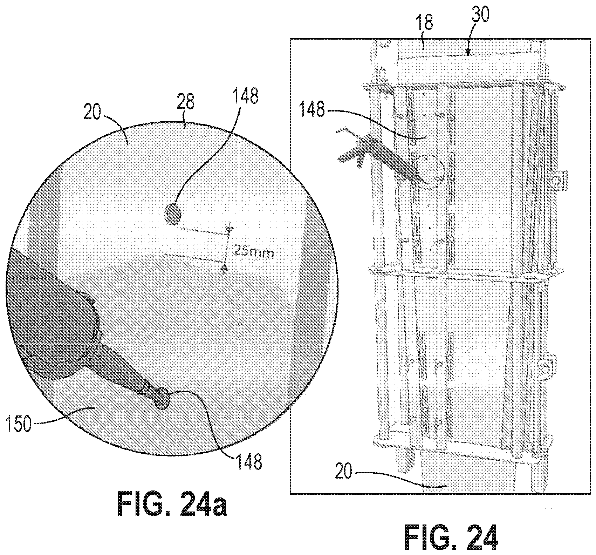

Referring to Figure 24 and the enlarged view of Figure 24a, with the tip extension 20 suitably positioned over the tip end of the blade 18, adhesive 150 is injected through the injection holes 148 provided in the outer shell 28 of the tip extension 20. For each bond region, a series of injection holes 148 is provided in the tip extension 20, with the holes 148 being mutually spaced in the longitudinal direction (i.e. along the length) of the tip extension 20. The adhesive 150 is injected through each hole 148 in the series sequentially starting with the hole 148 nearest the tip 36 of the tip extension 20 and moving from hole-to-hole towards the inboard end 30 of the tip extension 20. The adhesive 150 begins to fill the bond gaps defined between the inner surface of the tip extension 20 and the outer surface of the blade 18, and is constrained to these regions by the adhesive dams 126 applied to the tip end 19 of the blade 18 (and shown in Figure 10b), which form a seal around the bond regions between the tip extension 20 and the blade surface.

As shown in Figure 24a, the flow of adhesive 150 in the bond regions can be monitored visually through the GFRP outer shell 28 of the tip extension 20, which is advantageously translucent. When the flow of adhesive 150 is seen to approach within a predetermined distance of the next injection hole 148 (in this case within approximately 25 mm) injection through the present hole 148 is terminated and injection commences through the next hole 148 in the series. Injecting sequentially through each hole 148 moving towards the inboard end 30 of the tip extension 20 is advantageous because the inboard end 30 is open and allows air to escape during the injection process. This avoids air lock offs in the bond regions and hence avoids voids forming in the adhesive bonds. In addition, stopping adhesive injection within the pre-determined distance also reduces the back pressure of adhesive, and therefore reduces the risk of breaching the adhesive dams.

Once the injection of adhesive 150 has been completed, the adhesive 150 is allowed a predetermined time to cure. Heated blankets may optionally be applied over the tip extension 20 to increase the speed of the curing process.

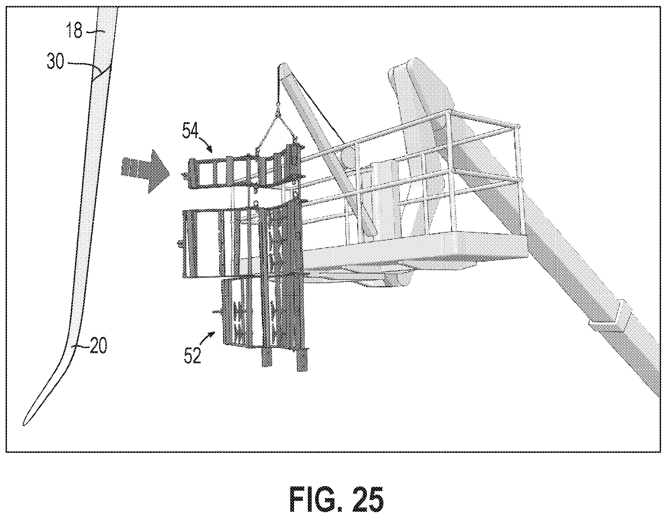

Referring to Figure 25, once the adhesive has cured, the blade clamp 54 and tip extension lifting tool 52 are opened and removed from the blade 18 and tip extension 20 respectively. This completes the tip extension installation process. Optionally, additional processes may be employed. For example, sealant may be provided around the inboard end 30 of the tip extension 20. Drain holes may be provided in the tip extension 20 if required. If any lightning receptors were removed from the tip end of the blade 18 during preparation of the blade tip, then these may be reinstated in the tip extension 20 in similar positions.

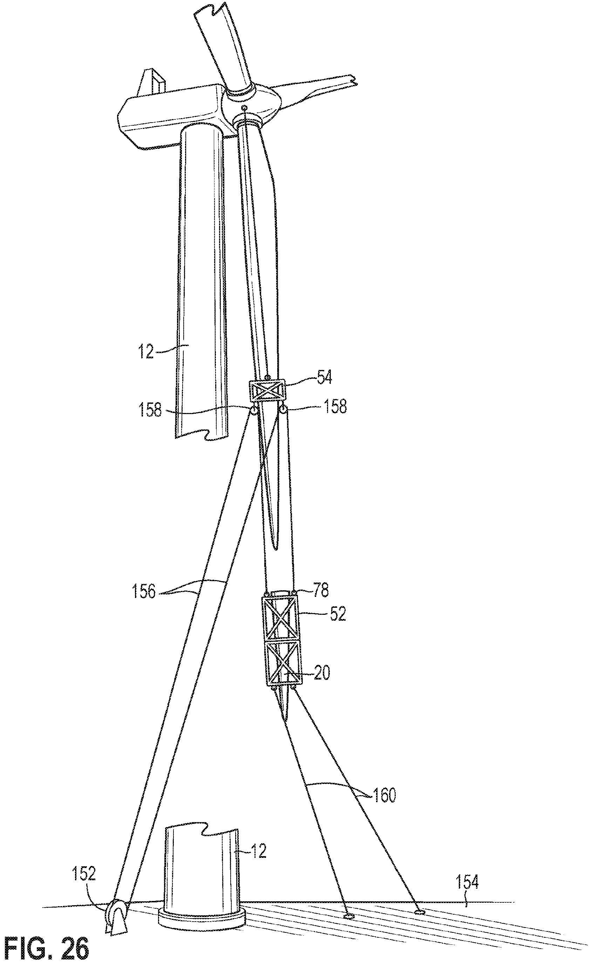

Referring to Figure 26, this shows an alternative example of fitting a tip extension 20 within the scope of the present invention. The process may utilise the same tool kit 50 as described previously, i.e. a blade clamp 54 and a tip extension lifting tool 52. However, in this embodiment a lifting device in the form of a winch 152 may be used instead of a cradle to lift the tip extension 20.

As shown in Figure 26, a winch 152 including a counterweight (not shown) is located on the ground 154 near the wind turbine tower 12. Cables 156 extend from the winch 152 up to the blade clamp 54. The blade clamp 54 includes a pair of pulleys 158 over which the cables 156 run before extending down to connect to the lifting eyes 78 of the tip extension lifting tool 52. The winch 152 may also obviate the need for ratchet hoists, although ratchet hoists such as those described previously may still be used in combination with the winch 152 if convenient.

The winch 152 is operated to lift the tip extension lifting tool 52 up towards the blade clamp 54. The blade clamp 54 may then be connected to the lifting tool 52 in a similar manner to that discussed for the previous example, e.g. using connecting rods. The process may be carried out by personnel suspended from abseil ropes, for example. Tag lines 160 may be connected to the lifting tool 52 to stabilise it during lifting and to prevent it from swinging.

Many modifications may be made to the specific examples described above without departing from the scope of the present invention as defined in the following claims.

## Claims

1. A method of fitting a tip extension (20) to a wind turbine blade (18), the method comprising:
providing a wind turbine (10) comprising a wind turbine blade having a tip end;
providing a tip extension (20) in the form of a sock having an interior for accommodating the tip end (19) of the blade;
supporting the tip extension (20) in a tip extension lifting tool (52);
attaching a blade clamp (54) to the wind turbine blade at a location radially inboard of the tip end (19);
lifting the tip extension lifting tool (52) and the tip extension (20) up to the tip end (19) of the blade;
connecting a connecting device (94a, 94b) between the blade clamp and the lifting tool, the connecting device being adjustable to vary the separation between the blade clamp and the lifting tool;
adjusting the connecting device (94a, 94b) to move the lifting tool towards the blade clamp such that the tip extension is pulled over the tip end of the blade;
**characterised in that** the connecting device (94a, 94b) includes one or more threaded connecting rods extending from the blade clamp (54) or the lifting tool (52), and the method comprises locating the one or more connecting rods respectively in one or more threaded apertures (100) in the lifting tool (52) or the blade clamp, and wherein adjusting the connecting device comprises turning the connecting rods within the threaded apertures.

2. The method of Claim 1, further comprising arranging a lifting device (132) between the blade clamp and the tip extension lifting tool and operating the lifting device to lift the lifting tool up towards the blade clamp.

3. The method of Claim 2, wherein the lifting device (132) comprises one or more ratchet hoists.

4. The method of Claim 2 or Claim 3, wherein the lifting device (132) comprises a winch.

5. The method of any preceding claim wherein the tip extension lifting tool (52) comprises one or more adjustable pressure pads (112) arranged to support the tip extension, and the method comprises adjusting the pressure pads to move the tip extension within the lifting tool and align the tip extension with the blade.

6. The method of Claim 5, wherein adjusting the pressure pads (112) causes the tip extension to move relative to the blade substantially in a flapwise direction.

7. The method of Claim 5 or Claim 6, comprising adjusting the pressure pad(s) (112) with the lifting tool connected to the blade clamp by means of the connecting device.

8. The method of any preceding claim, wherein the tip end (19) of the blade includes a blade tip connector (46) and a tip extension connector is provided inside the tip extension (20), and the method comprises establishing a push fit connection inside the tip extension between the respective connectors by adjusting the connecting device.

9. The method of any preceding claim, comprising providing the tip extension lifting tool (52) and the blade clamp (54) in the form of a tool kit (50) in which the blade clamp is connected to the tip extension lifting tool by means of the connecting device, the method further comprising detaching the blade clamp from the tip extension lifting tool prior to attaching the blade clamp to the blade.

10. The method of any preceding claim, comprising arranging the blade (18) so that it is pointing vertically downwards substantially in a six o' clock position.

## Patentansprüche

1. Verfahren zum Anbringen einer Spitzenverlängerung (20) an ein Windturbinenblatt (18), wobei das Verfahren umfasst:
Bereitstellen einer Windturbine (10), die ein Windturbinenblatt mit einem Spitzenende umfasst;
Bereitstellen einer Spitzenverlängerung (20) in Form einer Socke mit einem Innenraum zum Aufnehmen des Spitzenendes (19) des Blattes;
Stützen der Spitzenverlängerung (20) in einem Hebewerkzeug (52) für die Spitzenverlängerung;
Anbringen einer Blattklemme (54) an dem Windturbinenblatt an einer Stelle radial innerhalb des Spitzenendes (19);
Anheben des Hebewerkzeugs (52) für die Spitzenverlängerung und der Spitzenverlängerung (20) bis zum Spitzenende (19) des Blattes;
Verbinden einer Verbindungsvorrichtung (94a, 94b) zwischen der Blattklemme und dem Hebewerkzeug, wobei die Verbindungsvorrichtung einstellbar ist, um den Abstand zwischen der Blattklemme und dem Hebewerkzeug zu verändern;
Einstellen der Verbindungsvorrichtung (94a, 94b), um das Hebewerkzeug in Richtung der Blattklemme zu bewegen, so dass die Spitzenverlängerung über das Spitzenende des Blattes gezogen wird;
**dadurch gekennzeichnet, dass** die Verbindungsvorrichtung (94a, 94b) eine oder mehrere Gewindestangen beinhaltet, die sich von der Schaufelklemme (54) oder dem Hebewerkzeug (52) erstrecken, und das Verfahren das Anordnen der einen oder mehreren Verbindungsstangen jeweils in einer oder mehreren Gewindeöffnungen (100) in dem Hebewerkzeug (52) oder der Schaufelklemme umfasst, und wobei das Einstellen der Verbindungsvorrichtung das Drehen der Verbindungsstangen innerhalb der Gewindeöffnungen umfasst.

2. Verfahren nach Anspruch 1, weiterhin umfassend das Anordnen einer Hebevorrichtung (132) zwischen der Blattklemme und dem Hebewerkzeug für die Spitzenverlängerung und das Betätigen der Hebevorrichtung, um das Hebewerkzeug in Richtung der Blattklemme anzuheben.

3. Verfahren nach Anspruch 2, wobei die Hebevorrichtung (132) einen oder mehrere Ratschenzüge umfasst.

4. Verfahren nach Anspruch 2 oder Anspruch 3, wobei die Hebevorrichtung (132) eine Winde umfasst.

5. Verfahren nach einem vorstehenden Anspruch, wobei das Hebewerkzeug (52) für die Spitzenverlängerung ein oder mehrere einstellbare Druckpolster (112) umfasst, die so angeordnet sind, dass sie die Spitzenverlängerung stützen, und das Verfahren das Einstellen der Druckpolster umfasst, um die Spitzenverlängerung innerhalb des Hebewerkzeugs zu bewegen und die Spitzenverlängerung mit dem Blatt auszurichten.

6. Verfahren nach Anspruch 5, wobei das Einstellen der Druckpolster (112) eine Bewegung der Spitzenverlängerung relativ zum Blatt im Wesentlichen in Schwenkrichtung bewirkt.

7. Verfahren nach Anspruch 5 oder Anspruch 6, umfassend das Einstellen des/der Druckpolster(s) (112), wobei das Hebewerkzeug mittels der Verbindungsvorrichtung mit der Blattklemme verbunden ist.

8. Verfahren nach einem vorstehenden Anspruch, wobei das Spitzenende (19) des Blattes einen Blattspitzenverbinder (46) enthält und ein Spitzenverlängerungsverbinder im Inneren der Spitzenverlängerung (20) vorgesehen ist, und das Verfahren das Herstellen einer Steckverbindung im Inneren der Spitzenverlängerung zwischen den jeweiligen Verbindern durch Einstellen der Verbindungsvorrichtung umfasst.

9. Verfahren nach einem vorstehenden Anspruch, umfassend das Bereitstellen des Hebewerkzeugs (52) für die Spitzenverlängerung und der Blattklemme (54) in Form eines Werkzeugsatzes (50), in dem die Blattklemme mittels der Verbindungsvorrichtung mit dem Hebewerkzeug für die Spitzenverlängerung verbunden ist, wobei das Verfahren weiter das Lösen der Blattklemme von dem Hebewerkzeug für die Spitzenverlängerung vor dem Anbringen der Blattklemme an dem Blatt umfasst.

10. Verfahren nach einem vorstehenden Anspruch, umfassend das Anordnen des Blattes (18) so, dass es im Wesentlichen in einer Sechs-Uhr-Position vertikal nach unten zeigt.

## Revendications

1. Procédé de montage d'une extension de pointe (20) à une pale d'éolienne (18), le procédé comprenant :
la fourniture d'une éolienne (10) comprenant une pale d'éolienne présentant une extrémité de pointe ;
la fourniture d'une extension de pointe (20) sous la forme d'une chaussette présentant un intérieur destiné à recevoir l'extrémité de pointe (19) de la pale ;
le support de l'extension de pointe (20) dans un outil de levage d'extension de pointe (52) ;
la fixation d'un dispositif de serrage de pale (54) à la pale d'éolienne au niveau d'un emplacement radialement à l'intérieur de l'extrémité de pointe (19) ;
le levage de l'outil de levage d'extension de pointe (52) et de l'extension de pointe (20) jusqu'à l'extrémité de pointe (19) de la pale ;
le raccordement d'un dispositif de raccordement (94a, 94b) entre le dispositif de serrage de pale et l'outil de levage, le dispositif de raccordement étant ajustable pour faire varier la séparation entre le dispositif de serrage de pale et l'outil de levage ;
l'ajustement du dispositif de raccordement (94a, 94b) pour déplacer l'outil de levage en direction du dispositif de serrage de pale de sorte que l'extension de pointe est tirée par-dessus l'extrémité de pointe de la pale ;
**caractérisé en ce que** le dispositif de raccordement (94a, 94b) inclut une ou plusieurs tiges filetées de raccordement s'étendant à partir du dispositif de serrage de pale (54) ou de l'outil de levage (52), et le procédé comprend le positionnement de l'une ou plusieurs tiges de raccordement respectivement dans une ou plusieurs ouvertures filetées (100) dans l'outil de levage (52) ou le dispositif de serrage de pale, et dans lequel l'ajustement du dispositif de raccordement comprend le fait de tourner les tiges de raccordement à l'intérieur des ouvertures filetées.

2. Procédé selon la revendication 1, comprenant en outre la mise en place d'un dispositif de levage (132) entre le dispositif de serrage de pale et l'outil de levage d'extension de pointe et le fonctionnement du dispositif de levage pour lever l'outil de levage en direction du dispositif de serrage de pale.

3. Procédé selon la revendication 2, dans lequel le dispositif de levage (132) comprend un ou plusieurs palans à cliquet.

4. Procédé selon la revendication 2 ou la revendication 3, dans lequel le dispositif de levage (132) comprend un treuil.

5. Procédé selon une quelconque revendication précédente dans lequel l'outil de levage d'extension de pointe (52) comprend un ou plusieurs patins de pression ajustables (112) agencés pour supporter l'extension de pointe, et le procédé comprend l'ajustement des patins de pression pour déplacer l'extension de pointe à l'intérieur de l'outil de levage et aligner l'extension de pointe avec la pale.

6. Procédé selon la revendication 5, dans lequel l'ajustement des patins de pression (112) amène l'extension de pointe à se déplacer par rapport à la pale sensiblement dans une direction de battement.

7. Procédé selon la revendication 5 ou la revendication 6, comprenant l'ajustement du ou des patin(s) de pression (112) avec l'outil de levage raccordé au dispositif de serrage de pale au moyen du dispositif de raccordement.

8. Procédé selon une quelconque revendication précédente, dans lequel l'extrémité de pointe (19) de la pale inclut un connecteur de bout de pale (46) et un connecteur d'extension de pointe est fourni à l'intérieur de l'extension de pointe (20), et le procédé comprend l'établissement d'un raccordement à ajustage correct à l'intérieur de l'extension de pointe entre les connecteurs respectifs en ajustant le dispositif de raccordement.

9. Procédé selon une quelconque revendication précédente, comprenant la fourniture de l'outil de levage d'extension de pointe (52) et du dispositif de serrage de pale (54) sous la forme d'une trousse à outils (50) dans laquelle le dispositif de serrage de pale est raccordé à l'outil de levage d'extension de pointe au moyen du dispositif de raccordement, le procédé comprenant en outre le détachement du dispositif de serrage de pale de l'outil de levage d'extension de pointe avant de fixer le dispositif de serrage de pale à la pale.

10. Procédé selon une quelconque revendication précédente, comprenant la mise en place de la pale (18) de sorte qu'elle est tournée verticalement vers le bas sensiblement à une position six heures.
